# EUROPEAN PATENT SPECIFICATION

(11) **EP 3 237 744 B1**
(45) Date of publication and mention of the grant of the patent: **06.04.2022**
(21) Application number: 15831005.2
(22) Date of filing: 23.12.2015
(51) Int. Cl.: F02M 35/10, F02B 29/04, F28F 9/00, F28D 21/00, F16J 15/02, F28F 9/02, F02M 35/104

(54) **ASSEMBLY OF A HEAT EXCHANGER**
WÄRMETAUSCHERANORDNUNG
ENSEMBLE D'ÉCHANGEUR DE CHALEUR

(30) Priority: 23.12.2014 PL 41075614
(43) Date of publication of application: 01.11.2017
(73) Proprietor: VALEO AUTOSYSTEMY Sp. z o.o., 32-050 Skawina (PL); Valeo Systemes Thermiques, 78320 Le Mesnil Saint Denis (FR)
(72) Inventor: BEDEK, Adam, 31-207 Kraków (PL); FERLAY, Benjamin, 78720 Camay la Ville (FR); KLUSEK, Maciej, 27-400 Ostrowiec Swietokrzyski (PL)
(74) Representative: Valeo Systèmes Thermiques
(86) International application number: PCT/PL2015/000208
(87) International publication number: WO 2016/105223

(56) References cited:
- GB-A- 2 142 716
- US-A1- 2009 261 533
- US-A1- 2014 138 071
- US-B1- 8 136 279

## Description

### Technical Field

The present invention relates to an assembly of a heat exchanger having a seal for sealing off the gap between a heat exchanger and the inside wall of a groove in a fluid channel for accommodating said heat exchanger. More particularly, the present disclosure relates to sealing off the gap between the side wall of an air intake manifold and at least part of the circumference of a heat exchanger positioned inside said air intake manifold.

### Background of the Invention

In turbocharged engine applications, the air used for the engine combustion is compressed in order to increase its density. The thermodynamic effect of this compression is an increase in the temperature of the compressed air. If the compressed air is not cooled to a sufficient level, the engine combustion may not be efficient, or the combustion engine may not operate at all.

Therefore, prior to entering the combustion chamber, the compressed air is cooled by means of a Charge Air Cooler (CAC).

In the prior art Charge Air Coolers are disclosed which comprise a heat exchange vessel for heat exchange between two fluids, the heat exchange vessel being positioned inside a housing or exterior of the heat exchanger. In this case, the Charge Air Cooler is a Water Charge Air Coller wherein the fluid used to exchange with the charge air is a glycol solution.

US2014138071A relates to a heat exchanger for heat exchange between at least two fluids, especially for a motor vehicle, comprising a bundle for heat exchange between said fluids, and a housing for receiving said bundle, said housing having at least one raised edge. The invention is characterised in that the exchanger also comprises a seal consisting of a rigid plastic material, said seal enveloping said at least one raised edge and being designed to ensure the tightness between the exchanger and a container of said exchanger. US2014138071A also relates to an air intake device comprising such a heat exchanger and an air intake collector.

It is possible to directly position the Water Charge Air Cooler inside the air intake manifold (AIM). This means that air is guided through the air intake manifold along the heat exchanger towards the combustion chamber.

In order to receive and fix the heat exchanger, an air intake manifold adapted to receive a heat exchanger in its interior comprises a groove for receiving at least a part of the circumference of the heat exchanger and/or a seal connected to said at least part circumference of the heat exchanger.

In practice, it is possible that this groove comprises, along its length, imperfections which are linked to the air intake manifold production process. Such imperfections may be linked, for instance, to the welding of plastic parts to obtain the final air intake manifold.

Any imperfections on the surface of the groove may lead to sealing problems between the interior of the groove, generally made of a plastic material, and the outside of the heat exchanger, generally made of metal.

Any leakage between the inside wall of the air intake manifold and the outside of the heat exchanger will lead to air bypass, resulting in air not being properly cooled before it is forwarded to the combustion chamber.

In view of the present emission standards which apply to the automotive industry, with even more stringent legislation underway, the current trend is to move towards combustion engines with higher inlet pressures and temperatures to improve fuel efficiency. In order to allow this, the compressed air needs to be cooled to even lower temperatures prior to entering the combustion chamber to ensure operation of the combustion engines.

Therefore, there appears to be a need for efficient and effective heat exchangers which are adapted to be used as Charge Air Coolers and allow cost and space efficient heat exchange.

### Summary of the Invention

The present invention is directed to an assembly of a heat exchanger and a fluid channel for guiding a fluid through said heat exchanger, wherein the fluid channel comprises a groove for receiving at least part of the circumference of the heat exchanger, the assembly comprising a seal for sealing off the gap between the heat exchanger and the inside wall of the groove, the seal comprising at least one fixing member for fixing the seal on at least part of the circumference of the heat exchanger and at least a first and second lip adapted to contact opposite sides of the groove to thereby seal off the gap between the heat exchanger and the fluid channel and to fix said at least part of the circumference of the heat exchanger inside the groove, the seal comprising a first and second fixing member adapted to snap fit a part of the heat exchanger between the two members, whereby at least the first lip comprises a flexible material, to allow the lip to bend under pressure. wherein the second lip comprises material with a higher resistance against bending than the first lip.

An effect of the use of two lips, each having a different resistance against bending is that a first, more flexible lip can be used predominantly for sealing purposes, wherein a second, more rigid lip can be used for structural and fixing purposes.

According to an embodiment of the invention, it is possible that the seal is obtained by means of extrusion.

According to an embodiment of the invention, it is possible that the seal is obtained by means of injection moulding.

In a yet further aspect, the present disclosure is directed to an air intake manifold (AIM) comprising the assembly according to the disclosure.

### Brief Description of the Drawings

The accompanying drawings illustrate presently exemplary embodiments of the disclosure and help to explain the details of the advantages of the disclosure.
Figure 1 is a schematic representation of a heat exchanger provided with a seal inside an air intake manifold,
Figure 2 shows a cross-section of the seal according to the present disclosure, and
Figure 3 shows an example of a misalignment between two parts forming a groove to receive at least part of a heat exchanger and/or seal, which mismatch can be adjusted by means of the seal according to the disclosure.

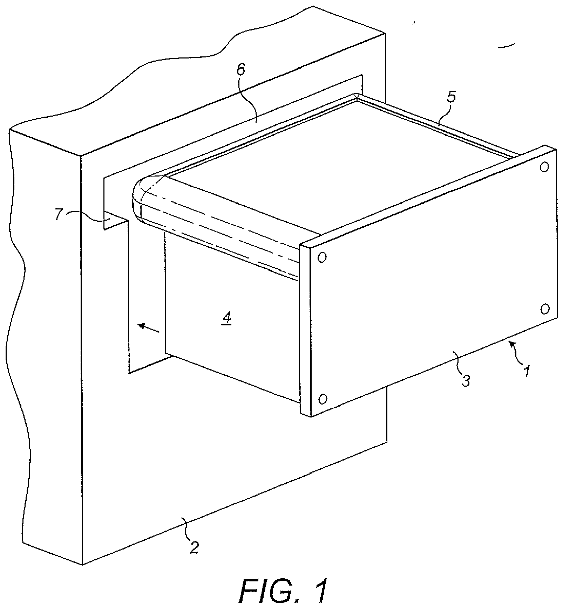

In Figure 1, the assembly of a heat exchanger 1 inside an air intake manifold 2 is shown schematically. The heat exchanger 1 is provided with a front plate 3 and a heat exchange vessel 4. Part of the upper circumference of the vessel 4 is provided with a seal 5 according to the disclosure.

The air intake manifold 2 is provided with an aperture 6 for allowing the insertion of the heat exchanger 1 inside the air intake manifold 2. The air intake manifold 2 is provided with two opposite facing grooves 7 (the groove on the right hand side is hidden behind the heat exchanger 1), wherein each groove 7 is adapted to receive in its interior the seal 5. The grooves 7 are at their extremity connect by means of a further groove (not shown). The grooves together form a U form, adapted to receive the seal 5. Once the heat exchanger 3 is inserted and fixed against the outside of the air intake manifold 2, the seal 5 around the circumference of the vessel 4 is adapted to seal off the gap between the interior of the grooves 7 and the vessel 4.

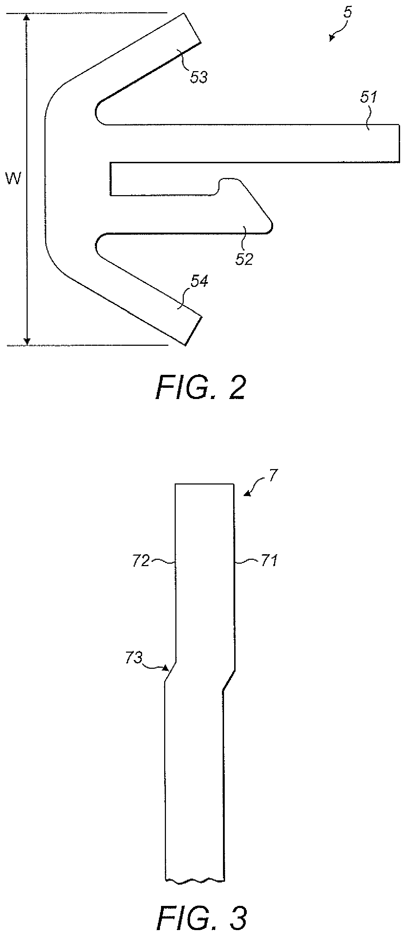

With reference to Figure 2, the functioning of the seal 5 will be described in detail. The seal 5 provides, in a first instance, a proper seal to avoid leakage between the exterior of the vessel 4 and the interior of the groove 7. By avoiding leakage, all air travelling through the air intake manifold 2 passes through the heat exchanger vessel 4. Therefore, the heat travelling through the air intake manifold in the direction of the combustion chamber can be efficiently cooled.

Secondly, the seal 5 is used to fix the vessel 4 of the heat exchanger 1 over the entire length of the seal 5. As can be seen in Figure 1, if the heat exchanger 1 is only fixed by means of the front plate 3 to the exterior of the air intake manifold 2, the heat exchanger would be fixed at one extremity to the air intake manifold 2. The remaining part of the heat exchanger would not be directly fixed to the interior of the air intake manifold 2. In that case, the heat exchanger 1 in its entirety would be sensitive to a pendulum effect, meaning that under the influence of vibrations and shocks, proper connection of the heat exchanger to the exterior of the air intake manifold 2 would be compromised. According to the invention, the fixing of the circumference of the vessel 4 inside the groove 7 by means of the seal 5 avoids the occurrence of such a pendulum effect.

In Figure 2, an exemplary embodiment of the seal 5 according to the present invention is shown. The seal 5 comprises a first member 51 and a second member 52 which are used to fix the seal 5 to the exterior of the vessel 4. To allow such fixing, the members 51 and 52 are attached, for instance, to the retention tabs of the vessel 4. The retention tabs are available, for instance, when the vessel 4 comprises a pile of sheet plates which are fit together to form the fluid guides for both the air travelling through the heat exchanger 1 and the refrigerant used as a coolant.

The seal 5 further comprises a first lip 53 and a second lip 54 which are adapted to contact the interior of the groove 7. The lips 53 and 54 are adapted to contact a first interior wall 71 and a second interior wall 72. The groove 7 is shown schematically in Figure 3.

Figure 3 shows the interior of the wall having two side walls 71 and 72 which are spaced apart at a distance which is inferior to the maximum width of the seal 5, indicated with the letter W in Figure 2. Thus, the seal 5, when introduced inside the groove 7, is compressed and the lips 53 and 54 are at least over a short distance moved towards each other. The compression put on the lips 53, 54 helps the seal to seal off the gap between the outside of the vessel 4 and the inside of the groove 7, in particular the walls 71 and 72, as a result of the compression put on the lips 53 and 54 and the resilience of the lips 53 and 54 allowing for the bending of the lips 53 and 54 at least one with respect to the other.

Figure 3 shows a possible misalignment between a first part of the air intake manifold and a second part of the air intake manifold, which are connected at a welding line 73. In view of the slight mismatch of the two elements forming the groove 7, the groove 7 is not a perfectly straight groove but presents a discontinuity. The seal 5 can adapt to the presence of the discontinuity by means of the deformation of the lips 53, 54 as indicated above.

According to the invention, the resistance against bending of the first lip 53 differs from the resistance against bending of the second lip 54. The advantage of this measurement is that, for instance, the first lip 54 is specifically adapted to allow bending in order to adjust for possible misalignments in the groove 7. The second lip 54, with a higher resistance against bending, could be used specifically for proper fixing of the seal 5 and therewith of the heat exchanger 1 within the groove 7 in order to avoid any detrimental pendulum effect.

## Claims

1. Assembly of a heat exchanger (1) and a fluid channel for guiding a fluid through said heat exchanger (1), wherein the fluid channel comprises a groove (7) for receiving at least part of the circumference of the heat exchanger (1), the assembly comprising a seal (5) for sealing off the gap between the heat exchanger (1) and the inside wall of the groove (7), the seal (5) comprising at least one fixing member (51, 52) for fixing the seal (5) on at least part of the circumference of the heat exchanger (1) and at least a first (53) and second lip (54) adapted to contact opposite sides (71, 72) of the groove (7) to thereby seal off the gap between the heat exchanger (1) and the fluid channel and to fix said at least part of the circumference of the heat exchanger (1) inside the groove (7), the seal (5) comprising a first (51) and second (52) fixing member adapted to snap fit a part of the heat exchanger (1) between the two members, **characterised in that**, at least the first lip (53) comprises a flexible material, to allow the lip (53) to bend under pressure. wherein the second lip (54) comprises material with a higher resistance against bending than the first lip (53).

2. Assembly of a heat exchanger (1) and a fluid channel according to claim 1, wherein the seal (5) is obtained by means of extrusion.

3. Assembly of a heat exchanger (1) and a fluid channel according to any of the preceding claims, wherein the seal (5) is obtained by means of injection moulding.

4. Air intake manifold (AIM) (2) comprising the assembly according to any of the claims 1 to 3.

## Patentansprüche

1. Anordnung aus einem Wärmetauscher (1) und einem Fluidkanal zum Führen eines Fluids durch den Wärmetauscher (1), wobei der Fluidkanal eine Nut (7) zur Aufnahme mindestens eines Teils des Umfangs des Wärmetauschers (1) umfasst, wobei die Anordnung eine Dichtung (5) zum Abdichten des Spalts zwischen dem Wärmetauscher (1) und der Innenwand der Nut (7) umfasst, wobei die Dichtung (5) mindestens ein Befestigungsglied (51, 52) zum Befestigen der Dichtung (5) an mindestens einem Teil des Umfangs des Wärmetauschers (1) und mindestens eine erste (53) und zweite Lippe (54) umfasst, die dazu ausgeführt sind, einander gegenüberliegende Seiten (71, 72) der Nut (7) zu berühren, um dadurch den Spalt zwischen dem Wärmetauscher (1) und dem Fluidkanal abzudichten und den mindestens einen Teil des Umfangs des Wärmetauschers (1) in der Nut (7) zu befestigen, wobei die Dichtung (5) ein erstes (51) und ein zweites (52) Befestigungsglied umfasst, die dazu ausgeführt sind, einen Teil des Wärmetauschers (1) zwischen den beiden Gliedern einzurasten, **dadurch gekennzeichnet, dass** mindestens die erste Lippe (53) ein flexibles Material umfasst, damit sich die Lippe (53) unter Druck biegen kann, wobei die zweite Lippe (54) ein Material mit einem höheren Widerstand gegen Biegen als die erste Lippe (53) umfasst.

2. Anordnung aus einem Wärmetauscher (1) und einem Fluidkanal nach Anspruch 1, wobei die Dichtung (5) mittels Extrusion erhalten wird.

3. Anordnung aus einem Wärmetauscher (1) und einem Fluidkanal nach einem der vorhergehenden Ansprüche, wobei die Dichtung (5) mittels Spritzgießen erhalten wird.

4. Einlasskrümmer (AIM) (2), der die Anordnung nach einem der Ansprüche 1 bis 3 umfasst.

## Revendications

1. Ensemble d'un échangeur de chaleur (1) et d'un canal de fluide permettant de guider un fluide à travers ledit échangeur de chaleur (1), le canal de fluide comprenant une rainure (7) permettant de recevoir au moins une partie de la circonférence de l'échangeur de chaleur (1), l'ensemble comprenant un joint d'étanchéité (5) permettant d'obturer de façon étanche l'intervalle entre l'échangeur de chaleur (1) et la paroi intérieure de la rainure (7), le joint d'étanchéité (5) comprenant au moins un élément de fixation (51, 52) permettant de fixer le joint d'étanchéité (5) sur au moins une partie de la circonférence de l'échangeur de chaleur (1) et au moins une première (53) et une deuxième lèvre (54) adaptées à venir au contact de côtés opposés (71, 72) de la rainure (7) pour ainsi obturer de façon étanche l'intervalle entre l'échangeur de chaleur (1) et le canal de fluide et pour fixer ladite au moins une partie de la circonférence de l'échangeur de chaleur (1) à l'intérieur de la rainure (7), le joint d'étanchéité (5) comprenant un premier (51) et un deuxième (52) élément de fixation adaptés à encliqueter une partie de l'échangeur de chaleur (1) entre les deux éléments, **caractérisé en ce qu'**au moins la première lèvre (53) comprend un matériau souple pour permettre à la lèvre (53) de fléchir sous la pression, la deuxième lèvre (54) comprenant un matériau présentant une résistance à la flexion plus élevée que celle de la première lèvre (53).

2. Ensemble d'un échangeur de chaleur (1) et d'un canal de fluide selon la revendication 1, dans lequel le joint d'étanchéité (5) est obtenu par extrusion.

3. Ensemble d'un échangeur de chaleur (1) et d'un canal de fluide selon l'une quelconque des revendications précédentes, dans lequel le joint d'étanchéité (5) est obtenu par moulage par injection.

4. Tubulure d'admission d'air (AIM) (2) comprenant l'ensemble selon l'une quelconque des revendications 1 à 3.
